# EUROPEAN PATENT APPLICATION

(11) **EP 3 879 430 A1**
(43) Date of publication of application: **15.09.2021**
(21) Application number: 20783327.8
(22) Date of filing: 27.03.2020
(51) Int. Cl.: G06F 40/58, G06F 40/42, G06Q 50/30

(54) **CHAT SYSTEM CAPABLE OF SUPPORTING MULTILINGUAL TRANSLATION, AND METHOD FOR PROVIDING TRANSLATION**

(30) Priority: 29.03.2019 KR 20190036561
(71) Applicant: Lee, Seung Jin, Yongin-si, Gyeonggi-do 16822 (KR)
(72) Inventor: Lee, Seung Jin, Yongin-si, Gyeonggi-do 16822 (KR)
(74) Representative: RGTH
(86) International application number: PCT/KR2020/095051
(87) International publication number: WO 2020/204680

(57) **Abstract**

The present invention relates to a chat system capable of supporting multilingual translation, and a method for providing translation. The present invention is characterized in that a user verifies translated content provided by a translation server, and at the same time, a deep learning server verifies the translation such that a person can directly correct the translation, and thus the content of a conversation is displayed in the language of the country of the user together with the content converted into the language of the country of a foreign conversation partner to eliminate the hassle of using an external translation program for translation and then copying and pasting. In addition, the present invention is characterized in that, when a chat partner uses a different language, the conversation content of the partner who converses during a chat is converted into the partner's language and displayed in both the user's language and the partner's language, thus enabling quick conversation with foreigners and the organization of a conversation history. In addition, the present invention has the effect wherein, if the country of a foreign conversation partner participating in a chat is checked when chatting with the foreigner, the conversation content can be displayed in the language of the country of the user and also in the language of the country of the foreign conversation partner to eliminate the hassle of using an external translation program for translation and then copying and pasting.

## Description

### [Technical Field]

The present invention relates to a chat system supporting multi-lingual translation and a method of providing translation, and more particularly, to a chat system supporting multi-lingual translation and a method of providing translation, in which during a dialogue among persons in a plurality of different languages in the same chat room, the dialogue is displayed also in a national language selected by a user or is displayed only in one national language, so that the dialogue may proceed fast among the persons of different nationalities and a dialogue history may be provided.

### [Background Art]

Along with the recent rapid growth of portable terminals including smart phones, various applications for providing instant messaging services have been used in mobile user terminals. The applications for providing instant messaging services enable message transmission and reception and content sharing. Particularly, due to the globalization of business, conversations frequently occur between people who speak various languages, and translation technology is also rapidly developing for communication between users who speak different languages.

Accordingly, the applications for providing instant messaging services support various languages serviced in various countries. Korean Patent Registration No. 10-1271285 discloses a method of supporting multi-lingual translation for a message in a chat window. However, upon selection of a language to be translated at the end of a message, the message is translated in the conventional technology. Therefore, only when a user in a chat room enters a message, the message is translated.

As a prior document for solving the above problem, Korean Laid-Open Patent Application No. 10-2018-0108973 discloses a "method of providing automatic translation during dialogue in a plurality of languages among users", including: identifying languages set by a plurality of users in a chat room; receiving a message from at least one of the plurality of users; translating the message into the languages set by the plurality of users, upon input of the message; and providing the content of the message input from the user and the content of the message translated into the languages set by the plurality of users to the chat room.

The above-described translation is provided by an automatic translation providing server including: an identifier for identifying languages set by a plurality of users in a chat room; a receiver for receiving a message from at least one of the plurality of users; a translator for translating the message into the languages set by the plurality of users, upon input of the message; and a provider for providing the content of the message input from the user and the content of the message translated into the languages set by the plurality of users to the chat room.

As the translation is provided to the other users without any means for verifying whether the translation is corrected, the users may have difficulty in understanding the message and the translation may cause misunderstanding in the above method and the server that provides the method. Therefore, the chat does not last for a long time.

### [Detailed Description]

### [Technical Problem]

An aspect of the present invention devised to solve the conventional problem is to provide a chat system supporting multi-lingual translation and a method of providing translation, in which during a dialogue among persons in a plurality of different languages in the same chat room, the dialogue is displayed also in a national language selected by a user or is displayed only in one national language, so that the dialogue may proceed fast among the persons of different nationalities and a dialogue history may be provided.

Another aspect of the present invention is to provide a chat system supporting multi-lingual translation and a method of providing translation, which enable both a user and a deep learning server to verify a translation provided by a translation server, so that the user may correct the translation directly.

### [Technical Solution]

In one aspect of the present invention, a chat system supporting multi-lingual translation is provided.

The chat system includes a platform server connected to a user terminal through a communication network to provide an application or chat program that translates a dialogue in real time to enable a chat among a plurality of users in languages set by the users and verify whether a translation of the user terminal is correct, and the user terminal in which the application or chat program including a translation program provided by the platform server is installed to enable the chat among the plurality of users in the languages set by the users.

According to the present invention, the platform server may include an operation server configured to provide the application or chat program including the translation program to the user terminal to be installed in the user terminal, for a chat among multi-nationals, and provide the content of a message transmitted and received by the user terminal through the communication network to a deep learning server to control the deep learning server to verify whether a translation is correct, a translation server configured to, upon receipt of the message, translate the content of the message into the language set by each of the plurality of users and provide the translation to each user terminal through the operation server, the deep learning server configured to determine whether the translation is correct by analyzing the content of the message received from the user terminal through the communication network, and when the translation is not correct, transmit a translation to the user terminal to display a checkbox on the user terminal and prompt a user to select the translation, and a database configured to include data (words, sentences, and so on) used for translation into a language of each country, information about users of user terminals, the translation program, and the application or chat program.

According to the present invention, the user terminal may be configured to transmit a message to multi-nationals set by a user in real time by the application or chat program provided by the platform server, primarily translate the content of the message by the translation program included in the application or chat program, and provide the translation to the deep learning server 120 through the communication network to verify whether the translation is correct.

In another aspect of the present invention, a method of providing a translation in a chat system supporting multi-lingual translation is provided.

The method includes a setting step S10 of selecting each country according to the countries of multi-nationals who entered a chat room and selecting a language to be displayed by an application or a chat program installed in a user terminal, a language identification step S20 of identifying a language set for each country and the language to be displayed on the user terminal, selected by the application or the chat program, and providing the identified languages along with information about the user terminal to a platform server through a communication network, a translation step S30 of analyzing and translating text of the content of a message input to the chat room from the user terminal by a translation program, and providing the input message content to the platform server, a filtering step S40 of searching for information values according to a setting of the language for each country and a setting of the language to be displayed on the user terminal by the translation program, for the content of the message input through the user terminal, a configuration step S50 of arranging the content of the message to be displayed on the user terminal according to an order of the multi-nationals entering the chat room, a country order, or an order in which the user enters the content of the message in the chat room, and a display step S60 of displaying only one language set to be displayed on the user terminal.

According to the present invention, the deep learning server may determine whether a translation of the content of a message input to the user terminal by the application or chat program or a translation of a message input to user terminals used by the multi-nationals is correct, and the user terminal may display the translation in the form of a checkbox.

### [Advantageous Effects]

According to the present invention, once the nationality of a foreigner participating in a chat is checked during the chat, the dialogue is displayed in a national language of a user and a national language of the foreigner, which eliminates the hassle of copying and pasting after translation through a separate translation program.

Further, even though a dialogue continues, the content of a previous message may be immediately grasped. Accordingly, the same message may be pasted or directly typed, thereby making the chat convenient.

Further, when the other party speaks in a different language during a chat, a message from the other party is converted into the language of the other party and displayed in both the language of a user and the language of the other party. Accordingly, the dialogue with the other party using the different language may proceed fast and a dialogue history may be provided.

### [Brief Description of Drawings]

FIG. 1 is a block diagram illustrating the configuration of a chat system supporting multi-lingual translation according to the present invention.
FIG. 2 is a diagram illustrating providing of a translation to a user terminal in the chat system supporting multi-lingual translation according to the present invention.
FIG. 3 is a flowchart illustrating a method of providing a translation in the chat system supporting multi-lingual translation according to the present invention.
FIGS. 4a to 4d are diagrams illustrating embodiments of displaying a translation on a user terminal in a method of providing a translation by the chat system supporting multi-lingual translation according to the present invention.

### [Best Mode]

The present invention may be modified in various manners and have various embodiments, and specific embodiments will be described with reference to the drawings.

However, it should be appreciated that various embodiments of the present invention are not intended to limit the particular embodiments and include various changes, equivalents, or replacements without departing the scope and spirit of the present invention.

Like reference numerals denote the same components throughout the drawings. The term as used in the present invention, 1st, 2nd, first, or second may be used to describe various components, not limiting the components. These expressions are used to distinguish one component from another component.

For example, the term "and/or" includes any and all combinations of one or more associated items.

Unless defined differently, all terms used herein, which include technical terminologies or scientific terminologies, have the same meaning as that understood by a person skilled in the art to which the invention belongs.

Such terms as those defined in a generally used dictionary are to be interpreted to have the meanings equal to the contextual meanings in the relevant field of art. Unless otherwise defined, the terms should not be interpreted as ideally or excessively formal meanings.

A chat system supporting multi-lingual translation and a method of providing a translation according to the present invention will be described below in detail.

According to the present invention, both a user and a deep learning server verify the content of a translation provided by a translation server, so that the user may directly correct the translation. Accordingly, a dialogue is displayed in a language of the user and a language of a foreigner being the other party, which eliminates the hassle of copying and pasting a translation after the translation is obtained by a separate translation program. Further, when the other party uses a different language during a chat, a message from the other party is displayed in the language of the user and a language of the other party through translation, thereby enabling a fast dialogue with the other party and providing a dialogue history.

The chat system supporting multi-lingual translation and the method of providing a translation according to the present invention, which have the above-described features, will be described in detail with reference to the attached drawings.

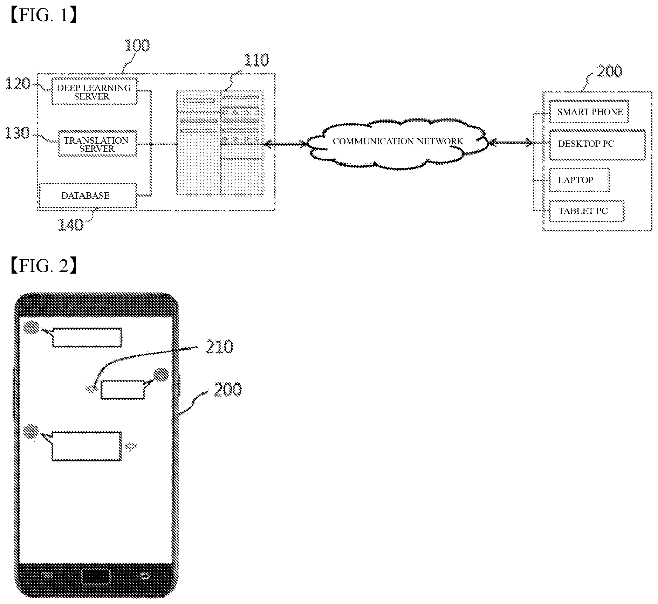

Referring to FIGS. 1 and 2, the chat system supporting multi-lingual translation according to the present invention includes a platform server 100 connected to a user terminal 200 through a communication network to provide an application or chat program that translates a dialogue in real time to enable a chat among a plurality of users in languages set by the users, and to enable the user terminal 200 to verify whether the translation is correct, and the user terminal 200 in which the application or chat program including a translation program provided by the platform server 100 is installed to enable a chat among a plurality of users in languages set by the users.

The platform server 100 includes an operation server 110, a deep learning server 120, a translation server 130, and a database 140.

The operation server 110 provides the application or chat program including the translation program to the user terminal 200 so as to be installed in the user terminal 200, for a chat among multi-nationals, and provides the content of messages transmitted and received by the user terminal 200 through the communication network to the deep learning server 120 to control the deep learning server 120 to verify whether a translation is correct.

The deep learning server 120 analyzes the content of a message received from the user terminal 200 through the communication network to determine whether the translation is correct. When the translation is not correct, the deep learning server 120 transmits a translation to the user terminal 200 through the operation server over the communication network to display a checkbox on the user terminal 200 and prompt the user terminal 200 to select the translation.

Upon receipt of a message, the translation server 130 translates the content of the message into a language set by each of a plurality of users and provides the translation to each user terminal 200 through the operation server 110.

The database 140 includes data (words, sentences, and so on) used to translate a message into a language of each country, information about users of user terminals 200, the translation program, and the application or chat program.

The communication network of the present invention includes an open network such as the Internet, a network such as code division multiple access (CDMA), wideband CDMA (WCDMA), global system for mobile communications (GSM), long term evolution (LTE), or evolved packet core (EPC), a next-generation network to be implemented in the future, and a computing network.

The application or chat program including the translation program provided by the operation server 110 is installed in the user terminal 200.

Further, the application or chat program installed in the user terminal 200 enables real-time message transmission to multi-nationals set by the user. The content of a message is primarily translated by the translation program included in the application or the chat program and then transmitted to the deep learning server 120 through the communication network, so that the deep learning server 120 may verify whether the translation is correct.

When the user terminal 200 determines that the content of the message transmitted to the deep running server 120 is not a correct translation, the user terminal 200 displays a checkbox 210 on one side of the message content and allows the user to select another sentence provided by the deep learning server 120 or a previous content input by means of the checkbox 210.

The user terminal 200 may include at least one of a keypad or a touchpad to generate an input signal according to a user's touch or manipulation.

The user terminal 200 may include one touch panel (or touch screen) together with a display to execute an input function and a display function at the same time. Further, the user terminal 200 may adopt any type of input means to be developed in the future as well as an input device such as a keyboard, a keypad, a mouse, a joystick, or the like. When the user terminal 200 uses an input device such as a keyboard, a keypad, a mouse, a joystick, or the like, the user terminal 200 is configured as a digital terminal such as a tablet or a smart phone, and has extensibility to connected to the above components.

The display displays information about a series of operation states and operation results that occur during execution of a function in the user terminal 200. In addition, the display may display a message content checkbox and the name of a selected country. The display may be any of a liquid crystal display (LCD), an ultra-thin liquid crystal display (or thin film transistor LCD (TFT-LCD)), a light emitting diode (LED) display, an organic light emitting diode (OLED) display, an active matrix OLED (AMOLED) display, a retina Display, a flexible display, and a three-dimensional (3D) display.

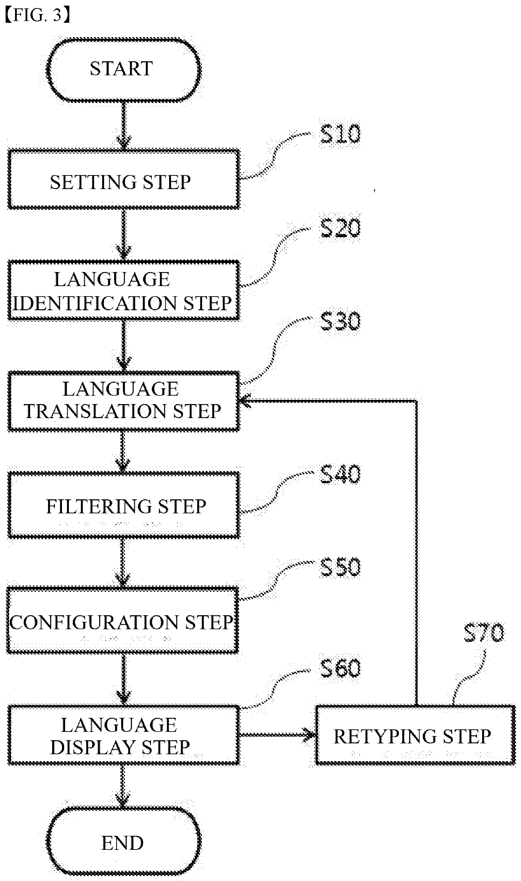

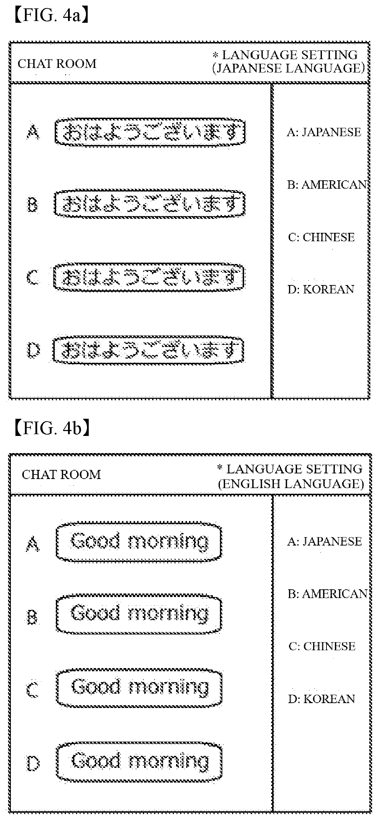

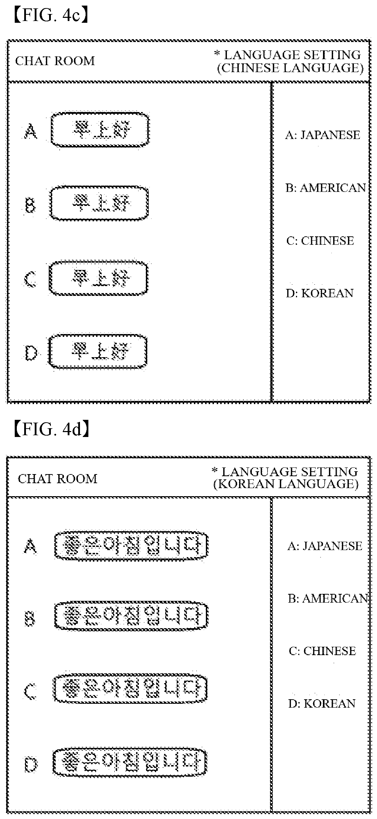

With reference to FIGS. 3 to 4d, a method of providing a translation of the content of a message to a user terminal during a chat in the above-described chat system supporting multi-lingual translation will be described below.

Referring to FIGS. 3 to 4d, the method of providing a translation in the chat system supporting multi-lingual translation is characterized in that a message input to the user terminal 200 is translated and displayed on user terminals 200 of multi-nationals, and messages input to the user terminals 200 of the multi-nationals are translated into a language selected by the user and displayed on the user terminal 200 of the user.

Before entering a message on the user terminal 200, the user first opens a chat room through the user terminal 200, selects each country according to the countries of multi-nationals who have entered the chat room, using the application or chat program installed in the user terminal 200, and selects a language to be displayed, that is, a language that the user may identify in a setting step S10.

In a language identification step S20, the selected languages of the respective countries and the language to be displayed on the user terminal 200 are identified and transmitted along with information about the user terminal 200 to the platform server 100 through the communication network by the application or chat program, so that the platform server 100 may identify which language is used in the user terminal 200.

In a translation step S30, the user terminal 200 analyzes and translates the text of a message input to the chat room by the translation program and transmits the content of the input message to the platform server 100.

Upon receipt of the content of the message through the communication network in the translation step S30, the operation server 110 of the platform server 100 transmits the content of the message to the deep learning server 120 to analyze the content of the message again based on data stored in the database 140 and thus verify whether the message has been correctly translated.

The translation content analysis of the deep learning server 120 includes comparing the translation with the prestored data in terms of ASCII code as well as amount to determine whether the amounts are similar and whether the codes are identical and thus determine whether the translation is correct.

In conjunction with the translation server 130, the deep learning server 120 determines whether the translation is correct based on data recently used by the user terminal 200 and data corrected by other user terminals 200.

When the deep learning server 120 determines that the content of the translated message is incorrect, the deep learning server 120 transmits the translated message to the translation server 130 to translate the message. The translation server 130 transmits the translated content to the deep learning server 120. When determining that the received translation is corrected based on a comparison with existing data, the deep learning server 120 transmits the translation to the user terminal 200 through the operation server 110 and the communication network, so that the translation is displayed in the form of a checkbox 310.

In a filtering step S40, information values according to the settings of the languages of the set countries and the setting of the language to be displayed on the user terminal 200 are searched for by the translation program, for the content of the message input through the user terminal 200.

The content of the message translated by the deep learning server 120 is also filtered in the filtering step S40. This operation is performed to verify whether the content of the message input by the user has been correctly translated for the multi-nationals.

In a configuration step S50, the content of the message is arranged to be displayed on the user terminals according to the order of the multi-nationals who have entered the chat room, the order of countries, or a message input order.

Further, the checkbox 210 is configured to allow the content of the message translated and provided by the deep learning server 120 in the configuration step S50.

In a display step S60, the content of the message applied in the configuration step S50 is displayed in the language set by the user on the user terminal 200. Another translation in the form of the checkbox 210 is displayed along with the translated content of the message content translated in the display step S60, so that the user may select a translation.

When the user selects the content displayed in the check box 210 to be displayed on the user terminals 200 of the multi-nationals of the countries set by the user, the application or chat program transmits message data including the selected message content, with code data indicating selection of the message content through the checkbox 210 in a header thereof, to the operation server 110, so that the message content may be displayed on the user terminals 200 of the multi-nationals.

As described above, once the nationality of the other party being a foreigner is checked during a chat with the foreigner, a dialogue is displayed in the language of the user's country and the language of the foreigner's country at the same time. Therefore, messages may be delivered without any difficulty in the conversation with the foreigner.

Further, even though the dialogue continues, the content of a previous message may be immediately grasped. Accordingly, the same message may be pasted or directly typed, thereby making the chat convenient.

Further, when multi-nationals (the other parties) speak in different languages during a chat, messages from the other parties are converted into the languages of the other parties and displayed in both the language of the user and the languages of the other parties. Accordingly, the chat with the other parties using the different languages may proceed fast and a dialogue history may be provided.

While this specification includes numerous specific implementation details, these are not to be construed as limiting the scope of any invention or claim, but to be understood as a description of features that may be specific to particular embodiments of a particular invention. Certain features described herein in the context of separate embodiments may be implemented in combination in a single embodiment. On the contrary, various features described in the context of a single embodiment may also be implemented in multiple embodiments, either individually or in any suitable sub-combination. Furthermore, although features operate in a particular combination and may be initially depicted as claimed as such, one or more features from a claimed combination may be excluded from the combination in some cases, and the claimed combination may be changed to a sub-combination or a variant of a sub-combination.

Likewise, although operations are depicted in a particular order in the drawings, it should not be understood that all of the operations are performed or the operations are performed sequentially or in the illustrated specific order. In some cases, multi-tasking and parallel processing may be advantageous. Further, separation of various system components in the above-described embodiments should not be construed as being required in all embodiments, and the above-described program components and systems are generally integrated into a single software product or packaged into multiple software products.

While the present invention has been described with reference to preferred embodiments of the present invention, the protection scope of the present invention is not limited to the above embodiments, and those skilled in the art will understand that many modifications and variations can be made to the present invention without departing from the scope and spirit of the present invention.

### [Description of Reference Numerals]

| | | | |
|---|---|---|---|
| 100: | platform server | 110: | operation server |
| 120: | deep learning server | 130: | translation server |
| 140: | database | 200: | user terminal |
| 210: | checkbox | | |

### [Industrial Applicability]

The present invention belongs to an industrial field in which during a dialogue among persons in a plurality of different languages in the same chat room, the dialogue is displayed also in a national language selected by a user or is displayed only in one national language, so that the dialogue may proceed fast among the persons of different nationalities and a dialogue history may be provided, and in which a translation provided by a translation server is verified by the user and a deep learning server at the same time, so that the user may directly correct the translation.

## Claims

1. A chat system supporting multi-lingual translation, comprising:
a platform server 100 including an operation server 110, a deep learning server 120, a translation server 130, and a database 140 and connected to a user terminal 200 through a communication network, to provide an application or chat program that translates a dialogue in real time to enable a chat among a plurality of users in languages set by the users, and to verify whether a translation of the user terminal 200 is correct; and
the user terminal 200 in which the application or chat program including a translation program provided by the platform server 100 is installed to enable the chat among the plurality of users in the languages set by the users,
wherein the platform server 100 comprises:
the operation server 110 configured to provide the application or chat program including the translation program to the user terminal 200 to be installed in the user terminal 200, for a chat among multi-nationals, and provide the content of a message transmitted and received by the user terminal 200 through the communication network to the deep learning server 120 to control the deep learning server 120 to verify whether a translation is correct;
the deep learning server 120 configured to determine whether the translation is correct by analyzing the content of the message received from the user terminal 200 through the communication network, and when the translation is not correct, transmit a translation to the user terminal 200 to display a checkbox 210 on the user terminal 200 and prompt a user to select the translation;
the translation server 130 configured to, upon receipt of the message, translate the content of the message into the language set by each of the plurality of users and provide the translation to each user terminal 200 through the operation server 110; and
the database 140 configured to include data (words, sentences, and so on) used for translation into a language of each country, information about users of user terminals 200, the translation program, and the application or chat program.

2. The method according to claim 1, wherein the user terminal 200 is configured to transmit a message to multi-nationals set by a user in real time by the application or chat program provided by the platform server 100, translate the content of message by the translation program included in the application or chat program, and provide the translation to the deep learning server 120 through the communication network to verify whether the translation is correct.

3. A method of providing a translation in a chat system supporting multi-lingual translation, the method comprising:
a setting step S10 of selecting each country according to the countries of multi-nationals who entered a chat room and selecting a language to be displayed by an application or a chat program installed in a user terminal 200;
a language identification step S20 of identifying a language set for each country and the language to be displayed on the user terminal 200, selected by the application or the chat program, and providing the identified languages along with information about the user terminal 200 to a platform server 100 through a communication network;
a translation step S30 of analyzing and translating text of the content of a message input to the chat room from the user terminal 200 by a translation program, and providing the input message content to the platform server 100;
a filtering step S40 of searching for information values according to a setting of the language for each country and a setting of the language to be displayed on the user terminal 200 by the translation program, for the content of the message input through the user terminal 200;
a configuration step S50 of arranging the content of the message to be displayed on the user terminal 200 according to an order of the multi-nationals entering the chat room, a country order, or an order in which the user enters the content of the message in the chat room; and
a display step S60 of displaying only one language set to be displayed on the user terminal 200,
wherein the deep learning server 120 determines whether a translation of the content of a message input to the user terminal 200 by the application or chat program or a translation of a message input to user terminals used by the multi-nationals is correct, and the user terminal displays the translation in the form of a checkbox 210.
